# EUROPÄISCHE PATENTSCHRIFT

(11) **EP 2 748 492 B1**
(45) Veröffentlichungstag und Bekanntmachung des Hinweises auf die Patenterteilung: **12.10.2016**
(21) Anmeldenummer: 12759638.5
(22) Anmeldetag: 09.08.2012
(51) Int. Cl.: F16J 1/22, F15B 7/08, F15B 15/14

(54) **KOLBENSTANGENANBINDUNG**
PISTON ROD CONNECTION
LIAISON POUR TIGE DE PISTON

(30) Priorität: 26.08.2011 DE 102011081653
(43) Veröffentlichungstag der Anmeldung: 02.07.2014
(73) Patentinhaber: Schaeffler Technologies AG & Co. KG, 91074 Herzogenaurach (DE)
(72) Erfinder: DECHORAIN, Cyril, F-45460 Bray en Val (FR)
(86) Internationale Anmeldenummer: PCT/DE2012/000805
(87) Internationale Veröffentlichungsnummer: WO 2013/029583

(56) Entgegenhaltungen:
- EP-A1- 1 386 809
- DE-A1- 19 752 076
- DE-A1-102008 050 292
- DE-A1-102009 021 347
- DE-T2-602005 006 325

## Beschreibung

Die vorliegende Erfindung betrifft eine Kolbenstangenanbindung gemäß dem Oberbegriff des Patentanspruchs 1. Insbesondere betrifft die Erfindung eine Kolbenstangenanbindung für einen Kolben, insbesondere für einen Zylinder von hydraulischen Betätigungsanlagen in Kraftfahrzeugen.

Aus der DE 10 2009 021 350 A1 ist eine Kolbenstangenanbindung bekannt. Dabei wird eine Kolbenstange mit ihrem kolbenseitigen Ende in einer Ausnehmung eines Adapterelementes aufgenommen, das aus zwei miteinander verbindbaren Gehäusehälften besteht. Das Ende der Kolbenstange und die dazu komplementär ausgebildete Ausnehmung weisen ein spezielles Profil auf. An ihren einander zugewandten Kontaktflächen weisen die Gehäusehälften Rastelemente auf, die mit korrespondierenden Rastaufnahmen in und außer Eingriff bringbar sind. Die beiden Gehäusehälften sind gelenkig miteinander verbunden.

Zur Montage wird das Endstück der Kolbenstange in den Aufnahmebereich einer Gehäusehälfte eingebracht, woraufhin die andere Gehäusehälfte verschwenkt wird, bis die genannten Rastelemente in den korrespondierenden Rastaufnahmen einrasten. In diesem Zustand wird das in den Aufnahmebereichen der beiden Gehäusehälften befindliche, speziell profilierte Endstück der Kolbenstange vollständig von dem Adapterelement umschlossen. Das dem Kolben zugewandte Ende der miteinander verbundenen Gehäusehälften wird dann mit dem Kolben des Zylinders verbunden. Derartige Anbindungen werden insbesondere bei Zylindern verwendet, bei denen der Kolben nicht durch eine Feder in Richtung auf die Kolbenstange vorgespannt ist.

Ein Problem solcher Kolbenstangenanbindungen besteht darin, dass ihre Herstellung, insbesondere wegen des speziellen Profils des Endstückes der Kolbenstange, relativ kompliziert und kostspielig ist, dass sie eine relativ große axiale Länge aufweisen und dass die auf den Kolben ausübbare maximale Zugkraft relativ klein ist. Die gesamten Betätigungskräfte müssen über das Adapterelement übertragen werden.

Aus der DE 10 2009 021 348 A1 ist eine Anbindung für ein kugelförmiges Endstück einer Kolbenstange bekannt. Dabei wird in eine zylindrische Bohrung eines Kolbens eine Kunststoffhülse eingepresst, die mithilfe von Rastelementen in seitlich angeordneten Ausnehmungen des Kolbens formschlüssig verankert wird. Am vorderen Ende der Hülse, das in Richtung zum Kolben zeigt, sind über den gesamten Umfang der Hülse fingerförmige Verlängerungen, die konisch verlaufen, ausgeformt. Die zugehörige Kolbenstange geht hinter dem kugelförmigen Endstück in einen radial kleineren zylinderförmigen Bereich über, der sich anschließend auf den Durchmesser der Kolbenstange erweitert.

Bei der Montage der Kolbenstangenanbindung wird zunächst der Kolben mit der Kunststoffhülse bestückt und danach wird die Kolbenstange eingeschoben, wobei diese mit ihrem kugelförmigen Endstück zunächst die fingerförmigen Verlängerungen aufweitet. Nach weiterem Einschieben federn die fingerförmigen Verlängerungen radial nach innen und rasten hinter dem kugelförmigen Endstück der Kolbenstange ein. Auf diese Weise wird eine axial nicht lösbare Verbindung geschaffen. Problematisch ist bei dieser Kolbenstangenanbindung die durch die fingerförmigen Verlängerungen der Hülse bedingte große axiale Baulänge sowie die Tatsache, dass bei einer Demontage der Kolbenstangenanbindung die Hülse zerstört werden muss.

Eine Kolbenstangenanbindung gemäß dem Oberbegriff des Patentanspruchs 1 ist aus der DE 197 52 076 A1 bekannt.

Die Aufgabe der vorliegenden Erfindung besteht darin, eine sichere und relativ einfach herstellbare Kolbenstangenanbindung zu schaffen, die eine relativ einfache Montage ermöglicht, die Übertragung großer Betätigungskräfte zulässt und zudem eine vergleichsweise kleine axiale Baulänge besitzt.

Nach der Erfindung wird dies durch eine Kolbenstangenanbindung mit den Merkmalen des Patentanspruches 1 erreicht.

In den Unteransprüchen enthaltene Merkmale betreffen am Anmeldetag bevorzugte Ausführungsformen der Erfindung.

Bei der erfindungsgemäßen Kolbenstangenanbindung für einen Kolben, insbesondere für einen Zylinder von hydraulischen Betätigungsanlagen in Kraftfahrzeugen, weist eine Kolbenstange im Kontaktbereich zum Kolben ein kugelförmiges Ende auf. Der Kolben weist im Kontaktbereich zur Kolbenstange eine zum kugelförmigen Ende der Kolbenstange komplementär ausgebildete kugelförmige Vertiefung auf, in die das kugelförmige Ende wenigstens teilweise einsetzbar ist. Zur Herstellung einer festen axialen Verbindung zwischen dem Kolben und der Kolbenstange ist das kugelförmige Ende der Kolbenstange in ein Ringteil, das eine zu beiden axialen Seiten offene kugelförmige Ausnehmung aufweist, einsetzbar. Die kugelförmige Vertiefung des Kolbens und die axial angrenzende kugelförmige Ausnehmung des Ringteiles umschließen das kugelförmige Ende der durch die Ausnehmung hindurch tretenden Kolbenstange. Das Ringteil ist formschlüssig und fest mit dem Kolben verbunden. Ferner bildet ein in in Querrichtung verlaufende Bohrungen des Zylinders eingeschobener Sicherungsbügel an der an dem Kolben abgewandten Seite einen axialen Anschlag für das Ringteil. Besonders vorteilhaft ist eine derartige Kolbenstangenanbindung deshalb, weil sie relativ große Betätigungskräfte übertragen kann, weil diese Kräfte sowohl über das Ringteil als auch über den Sicherungsbügel übertragen werden. Die axiale Baulänge der erfindungsgemäßen Kolbenstangenanbindung kann relativ klein sein, weil die Verbindung der Kolbenstange mit dem Kolben direkt über das teilweise in dem Ringteil und teilweise in einer kugelförmigen Vertiefung des Kolbens aufgenommene kugelförmige Endstück des Kolbens erfolgt. Die Ausgestaltung der erfindungsgemäßen Anbindung ermöglicht eine vergleichsweise einfache Montage.

Besonders einfach wird der Formschluss zwischen dem Ringteil und dem Kolben durch axial vorstehende Rastelemente hergestellt. Dabei wird das Ringteil zweckmäßigerweise aus Ringsegmenten zusammengesetzt, die mit der Hilfe von Führungselementen lagerichtig zusammengefügt werden, wobei im zusammengesetzten Zustand jedes Ringsegment ein axial in Richtung auf den Kolben vorstehendes Rastelement aufweist, und wobei sich die Rastelemente am Ringteil diametral gegenüberliegen. Dadurch wird zur Befestigung ein einfaches Einstecken des Ringteiles in den Kolben ermöglicht.

Die Rastelemente rasten bei einer Ausführungsform der Kolbenstangenanbindung in Ausnehmungen des Kolbens ein, die dadurch gebildet sind, dass der Kolben eine konzentrisch zur kugelförmigen Vertiefung verlaufende Bohrung und am Ende derselben eine weitere, quer zur Achse des Kolbens verlaufende Bohrung aufweist, in die die Rastelemente eingreifen können. Dadurch wird eine einfache Demontage des Ringteiles durch Einführen eines geeigneten Werkzeuges in die Bohrung ermöglicht.

Bei einer bevorzugten Ausführungsform der Kolbenstangenanbindung besteht das Ringteil aus zwei Ringsegmenten, die an den im Montagezustand einander zugewandten Trennflächen ineinander eingreifende Führungselemente aufweisen, um ein schnelles und lagerichtiges Zusammensetzen zu ermöglichen. Dabei weisen die Führungselemente vorzugsweise jeweils einen über die Trennfläche des einen Ringsegmentes vorstehenden Stift und eine in der Trennfläche des anderen Ringsegmentes angeordnete Ausnehmung auf. De Ringsegmente bestehen zweckmäßigerweise aus Kunststoff und werden vorzugsweise besonders einfach durch Spritzgießen in ein und derselben Spritzgussform hergestellt.

Um eine einfache, sichere und schnelle Befestigung des Sicherungsbügels zu ermöglichen, ist dieser U-förmig ausgebildet und sind seine Schenkel in in Querrichtung zur Achse des Kolbens verlaufende Bohrungen des Zylinders derart einschiebbar, dass die Schenkel des Sicherungsbügels die Ringsegmente beidseits der Achse des Ringteiles an der dem Kolben abgewandten Seite hintergreifen. Die Enden der Schenkel können Rastnasen aufweisen, die die Randbereiche derjenigen Bohrungen des Zylinders jeweils verriegelnd hintergreifen, aus denen die Schenkel jeweils austreten.

Die Montage der Kolbenstangenanbindung kann besonders schnell und einfach dadurch erfolgen, dass die Ringsegmente zu dem Ringteil derart zusammengesetzt werden, dass sie das kugelförmige Ende der Kolbenstange teilweise umschließen, dass danach das kugelförmige Ende der Kolbenstange umgreifende Ringteil in den Kolben eingeschoben wird, bis das dem Kolben zugewandte, kugelförmige Ende an der kugelförmigen Vertiefung des Kolbens anliegt und die Rastelemente am Kolben verriegelnd einrasten, und dass schließlich die Schenkel eines U-förmigen Sicherungsbügels in die in Querrichtung zur Achse des Kolbens verlaufende Bohrungen derart eingeschoben werden, dass die Schenkel des Sicherungsbügels die Ringsegmente beidseits der Achse des Kreisteiles an der dem Kolben abgewandten Seite hintergreifen.

Die Erfindung wird nachstehend anhand von Ausführungsbeispielen und Zeichnungen näher erläutert. Es zeigen:
Figur 1 eine Explosionsdarstellung der an der Kolbenstangenanbindung beteiligten Bauteile,
Figur 2 eine dreidimensionale Darstellung eines Ringsegments,
Figur 3 eine Schnittdarstellung der Kolbenstangenanbindung, wobei Zylinder, Kolben und Kolbenstange nur teilweise dargestellt sind, und
Figur 4 eine dreidimensionale Darstellung der Kolbenstangenanbindung, wobei der Zylinder und der Kolben jeweils im Schnitt dargestellt sind.

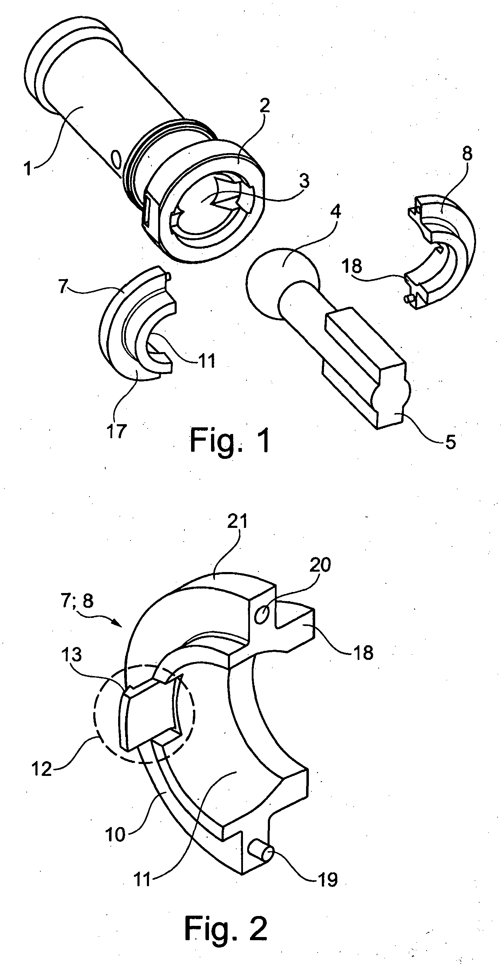

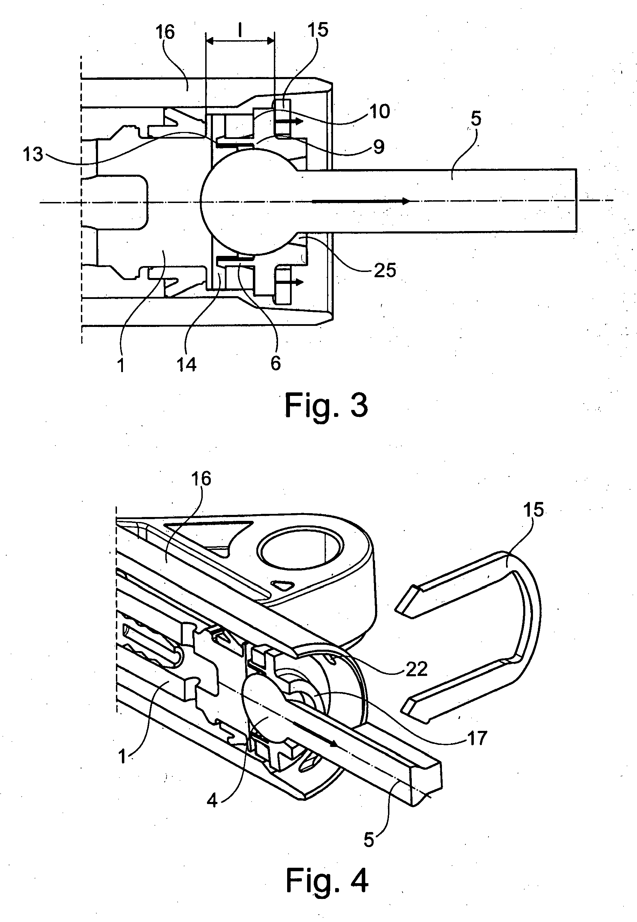

Gemäß Figur 1 umfasst ein Kolben 1, der in einer Bohrung eines Zylinders 16 (Figuren 4, 5) verschiebbar anordenbar ist, an seiner der Kolbenstange 5 zugewandten Stirnseite 2 eine kugelförmige Vertiefung 3, die wiederum mit einem kugelförmigen Ende 4 der Kolbenstange 5 in Verbindung steht. Im Kolben 1 ist ferner im Bereich der kugelförmigen Vertiefung 3 gemäß Figur 3 eine zylindrische Bohrung 6 vorhanden. Ein in der Figur 1 links gezeigtes erstes Ringsegment 7 und ein in der Figur 1 rechts gezeigtes zweites Ringsegment 8 bilden im zusammengefügten Zustand ein Ringteil 9. Das erste Ringsegment 7 und das zweite Ringsegment 8 besitzen jeweils einen halbkugelförmigen Hohlraum 11, derart, dass das zusammengesetzte Ringteil 9 das kugelförmige Ende 4 der Kolbenstange 5 in seinem aus den beiden halbkugelförmigen Hohlräumen 11 gebildeten kugelförmigen Hohlraum umschließen kann, wobei die Kolbenstange durch eine Öffnung 25 des Ringteiles 9 nach außen vorsteht.

Die so zusammengefügte Einheit aus der Kolbenstange 5 und dem Ringteil 9 kann mit dem Ringteil 9 voran in axialer Richtung in den Kolben 1 soweit eingeschoben werden, bis der über das Ringteil 9 vorstehende Bereich des kugelförmigen Endes 4 der Kolbenstange 5 in die kugelförmige Vertiefung 3 des Kolbens 1 eingreift.

An die dem Kolben 1 axial zugewandte Seite 10 des Ringteiles 9 sind axial vorstehende Rastelemente 12 angeformt, die sich im Montagezustand des Ringteiles 9 vorzugsweise diametral gegenüberliegen. Zweckmäßigerweise umfasst jedes Ringsegment 7, 8 ein Rastelement 12. Die Rastelemente 12 rasten mit vorzugsweise radial nach außen hervorstehenden Rastnasen 13 in eine quer verlaufende Bohrung 14 des Kolbens 1 ein (Figur 3). Auf diese Weise wird das Ringteil 9 mitsamt der Kolbenstange 5 axial fest im Kolben 1 gehalten. Vorzugsweise umschließt dabei die kugelförmige Vertiefung 3 die ihr zugewandte Hälfte des kugelförmigen Endes 5 der Kolbenstange 5 und umschließt der aus den halbkugelförmigen Hohlräumen 11, 11 gebildete kugelförmige Hohlraum einen an die genannte Hälfte axial angrenzenden Bereich des kugelförmigen Endes 4 der Kolbenstange 5.

Mit der Hilfe eines Sicherungsbügels 15, der vorzugsweise U-förmig ausgebildet ist und dessen Schenkel in sich in Querrichtung gegenüberliegende Bohrungen 22 des Zylinders 16 eingeschoben werden, wird die Kolbenstangenanbindung hinsichtlich der maximalen Ausfahrposition des Kolbens 1 gegenüber dem Zylinder 16 axial gesichert. Dabei liegt die Außenseite 17 des Ringteiles 9 an den Schenkeln des Sicherungsbügels 15 an. Die genannten Bohrungen 22 verlaufen dabei in der Umfangsrichtung des Zylinders 16 voneinander beabstandet durch die Zylinderwandung.

Um das richtige und sichere Zusammensetzen der Ringsegmente 7 und 8 zu erleichtern weisen diese an ihren Trennflächen 18 Führungselemente auf, die vorzugsweise als vorstehende Stifte 19 und komplementär dazu ausgestalte Ausnehmungen 20 ausgeführt sind. Zweckmäßigerweise weist jedes Ringsegment 7, 8 an einer Seite seiner Trennfläche 18 einen Stift 19 und an der diametral gegenüberliegenden Seite der Trennfläche 18 eine komplementär zu dem Stift 19 ausgebildete Ausnehmung 20 auf. Auf diese Weise wird sichergestellt, dass beim Zusammensetzen der Ringsegmente 7, 8 die gleichen axialen Seiten zueinander gelangen.

Das Ringsegment 8 und das Ringsegment 7 sind vorzugsweise aus Kunststoff hergestellt, wobei wiederum vorzugsweise ein Spritzgussverfahren für die Herstellung in Frage kommt. Da beide Ringsegmente 7, 8 dieselbe Form aufweisen, können sie vorteilhafter Weise in ein und derselben Spritzgussform hergestellt werden.

In vorteilhafter Weise wird eine Kolbenstangenanbindung geschaffen, die mit einem Minimum an Teilen auskommt, eine kurze Baulänge besitzt und eine zuverlässige Übertragung von Zugkräften auf den Kolben eines Zylinders innerhalb einer hydraulischen Betätigungsanlage ermöglicht.

Im Folgenden wird im Zusammenhang mit der Figur 5 die Montage der vorliegenden Anbindung erläutert. Zunächst werden die Ringsegmente 7 und 8 über dem kugelförmigen Ende 4 der Kolbenstange 5 derart zusammengefügt, dass sie das kugelförmige Ende 4 teilweise umschließen. Anschließende wird das kugelförmige Ende 4 der Kolbenstange 5 umgreifende Ringteil 9 in den Kolben 1 eingeschoben, bis das dem Kolben 1 zugewandte, kugelförmige Ende 4 an der kugelförmigen Vertiefung 3 des Kolbens 1 anliegt und die Rastelemente 12 in der Bohrung 14 des Kolbens 1 verriegelnd einrasten. Schließlich werden die Schenkel des U-förmigen Sicherungsbügels 15 in die sich in Querrichtung zur Achse des Kolbens 1 gegenüberliegenden Bohrungen derart eingeschoben, dass die Schenkel des Sicherungsbügels 15 das Ringteil 9 an sich diametral gegenüberliegenden Seiten an der dem Kolben 1 abgewandten Seite hintergreifen.

Es wird darauf hingewiesen, dass die erläuterten Rastelemente 12 zur axialen Festlegung des Ringteiles 9 in dem Kolben 8 auch in anderen Weisen ausgestaltet sein können. Dies gilt gleichermaßen für die Führungen zur Befestigung der Ringsegmente 7, 8 aneinander.

### Bezugszeichenliste

- 1: Kolben
- 2: Stirnseite
- 3: kugelförmige Vertiefung
- 4: kugelförmiges Ende
- 5: Kolbenstange
- 6: Bohrung
- 7: Ringsegment
- 8: Ringsegment
- 9: Ringteil
- 10: Seite
- 11: Hohlraum
- 12: Rastelement
- 13: Rastnasen
- 14: Bohrung
- 15: Sicherungsbügel
- 16: Zylinder
- 17: Außenseite
- 18: Trennfläche
- 19: Stift
- 20: Ausnehmung
- 21: Umfang

## Patentansprüche

1. Kolbenstangenanbindung mit einem Kolben (1), der in einer Bohrung eines Zylinders (16) verschiebbar angeordnet ist, und einer Kolbenstange (5), wobei die Kolbenstange (5) im Kontaktbereich zum Kolben (1) ein kugelförmiges Ende (4) besitzt, und der Kolben (1) im Kontaktbereich zur Kolbenstange (5) eine zum kugelförmigen Ende (4) der Kolbenstange (5) komplementär ausgebildete kugelförmige Vertiefung (3) aufweist, in die das kugelförmige Ende (4) der Kolbenstange (5) teilweise einsetzbar ist, wobei ein Ringteil (9) vorgesehen ist, das durch axial vorstehende Rastelemente (12) formschlüssig mit dem Kolben (1) verbunden ist und das eine zu beiden axialen Seiten offene kugelförmige Ausnehmung (11) umfasst, in die zur Herstellung einer festen axialen Verbindung zwischen dem Kolben (1) und der Kolbenstange (5) das kugelförmige Ende (4) der Kolbenstange (5) derart einsetzbar ist, dass die kugelförmige Vertiefung (3) des Kolbens (1) und die axial angrenzende kugelförmige Ausnehmung (11) des Ringteiles (9) das kugelförmige Ende (4) der durch die Ausnehmung hindurch tretenden Kolbenstange (5) umschließen, **dadurch gekennzeichnet, dass** ein in Querrichtung verlaufender Sicherungsbügel (15) am Zylinder (16) vorgesehen ist, der an der dem Kolben (1) abgewandten Seite einen axialen Anschlag für das Ringteil (9) bildet, und dass die Rastelemente (12) in Ausnehmungen des Kolbens (1) einrasten, die dadurch gebilded sind, dass der Kolben (1) eine konzentrisch zur kugelförmigen Vertiefung (3) verlaufende Bohrung (6) und am Ende derselben eine weitere, quer zur Achse des Kolbens (1) verlaufende Bohrung (14) aufweist, in die die Rastelemente (12) eingreifen.

2. Kolbenstangenanbindung nach Patentanspruch 1, **dadurch gekennzeichnet, dass** das Ringteil (9) aus Ringsegmenten (7, 8) besteht, die mit der Hilfe von Führungselementen (19, 20) lagerichtig zusammen setzbar sind, wobei im zusammengesetzten Zustand jedes Ringsegment (7, 8) ein axial in Richtung auf den Kolben (1) vorstehendes Rastelement (12) aufweist, und wobei sich die Rastelemente (12) am Ringteil (9) vorzugsweise diametral gegenüberliegen.

3. Kolbenstangenanbindung nach einem der Patentansprüche 1 bis 2, **dadurch gekennzeichnet, dass** das Ringteil (9) zwei Ringsegmente (7, 8) umfasst.

4. Kolbenstangenanbindung nach Anspruch 3, **dadurch gekennzeichnet, dass** die Ringsegmente (7, 8) an den im Montagezustand einander zugewandten Trennflächen (18) ineinander eingreifende Führungselemente (19, 20) aufweisen.

5. Kolbenstangenanbindung nach Patentanspruch 4, **dadurch gekennzeichnet, dass** die die Führungselemente jeweils einen über die Trennfläche (18) des einen Ringsegmentes (7) vorstehenden Stift (19) und eine in der Trennfläche des anderen Ringsegmentes (8) angeordnete Ausnehmung (20) umfassen.

6. Kolbenstangenanbindung nach einem der Patentansprüche 3 bis 5, **dadurch gekennzeichnet, dass** die Ringsegmente (7, 8) aus Kunststoff bestehen, vorzugsweise durch Spritzgießen hergestellt sind.

7. Kolbenstangenanbindung nach einem der Patentansprüche 1 bis 6, **dadurch gekennzeichnet, dass** der Sicherungsbügel (15) U-förmig ausgebildet ist und dass seine Schenkel (16) in in Querrichtung zur Achse des Kobens (1) verlaufende Bohrungen (22) des Zylinders (16) derart einschiebbar sind, dass sie die Ringsegmente (7, 8) beidseits der Achse des Ringteiles (9) an der dem Kolben (1) abgewandten Seite hintergreifen.

## Claims

1. Piston rod attachment having a piston (1) which is arranged displaceably in a bore of a cylinder (16), and a piston rod (5), the piston rod (5) having a spherical end (4) in the contact region with the piston (1), and the piston (1) having a spherical depression (3) of complementary configuration with respect to the spherical end (4) of the piston rod (5) in the contact region with the piston rod (5), into which depression (3) the spherical end (4) of the piston rod (5) can be inserted partially, a ring part (9) being provided which is connected to the piston (1) in a positively locking manner by way of axially projecting latching elements (12) and which comprises a spherical recess (11) which is open towards both axial sides and into which the spherical end (4) of the piston rod (5) can be inserted in order to produce a fixed axial connection between the piston (1) and the piston rod (5), in such a way that the spherical depression (3) of the piston (1) and the axially adjoining spherical recess (11) of the ring part (9) enclose the spherical end (4) of the piston rod (5) which passes through the recess, **characterized in that** a securing bracket (15) which runs in the transverse direction is provided on the cylinder (16), which securing bracket (15) forms an axial stop for the ring part (9) on the side which faces away from the piston (1), and **in that** the latching elements (12) latch into the recesses of the piston (1) which are formed by virtue of the fact that the piston (1) has a bore (6) which runs concentrically with respect to the spherical depression (3) and, at the end thereof, has a further bore (14) which runs transversely with respect to the axis of the piston (1), into which bores (6, 14) the latching elements (12) engage.

2. Piston rod attachment according to Patent Claim 1, **characterized in that** the ring part (9) consists of ring segments (7, 8) which can be assembled in a positionally correct manner with the aid of guide elements (19, 20), each ring segment (7, 8) having, in the assembled state, a latching element (12) which projects axially in the direction of the piston (1), and the latching elements (12) preferably lying diametrically opposite one another on the ring part (9).

3. Piston rod attachment according to either of Patent Claims 1 and 2, **characterized in that** the ring part (9) comprises two ring segments (7, 8).

4. Piston rod attachment according to Claim 3, **characterized in that** the ring segments (7, 8) have guide elements (19, 20) which engage into one another on the dividing faces (18) which face one another in the assembled state.

5. Piston rod attachment according to Patent Claim 4, **characterized in that** the guide elements in each case comprise a pin (19) which projects over the dividing face (18) of the one ring segment (7) and a recess (20) which is arranged in the dividing face of the other ring segment (8).

6. Piston rod attachment according to one of Patent Claims 3 to 5, **characterized in that** the ring segments (7, 8) consist of plastic, and are preferably produced by way of injection moulding.

7. Piston rod attachment according to one of Patent Claims 1 to 6, **characterized in that** the securing bracket (15) is of U-shaped configuration, and **in that** its limbs (16) can be pushed into bores (22) of the cylinder (16) which run in the transverse direction with respect to the axis of the piston (1), in such a way that they engage behind the ring segments (7, 8) on both sides of the axis of the ring part (9) on the side which faces away from the piston (1).

## Revendications

1. Liaison pour tige de piston comprenant un piston (1) qui est disposé de manière à pouvoir coulisser dans un alésage d'un cylindre (16) et une tige de piston (5), la tige de piston (5), dans la région de contact avec le piston (1), possédant une extrémité de forme sphérique (4) et le piston (1), dans la région de contact avec la tige de piston (5), présentant un renfoncement (3) de forme sphérique réalisé de manière complémentaire à l'extrémité de forme sphérique (4) de la tige de piston (5), dans lequel renfoncement peut être insérée en partie l'extrémité de forme sphérique (4) de la tige de piston (5), une partie annulaire (9) étant prévue, laquelle est connectée par engagement par correspondance de formes avec le piston (1) par des éléments d'encliquetage (12) faisant saillie axialement et laquelle comprend un évidement (11) de forme sphérique ouvert vers les deux côtés axiaux, dans lequel évidement, pour établir une connexion axiale fixe entre le piston (1) et la tige de piston (5), peut être insérée l'extrémité de forme sphérique (4) de la tige de piston (5) de telle sorte que le renfoncement de forme sphérique (3) du piston (1) et l'évidement de forme sphérique (11) axialement adjacent de la partie annulaire (9) entourent l'extrémité de forme sphérique (4) de la tige de piston (5) traversant l'évidement, **caractérisée en ce qu'**un étrier de fixation (15) s'étendant dans la direction transversale est prévu sur le cylindre (16), lequel forme, au niveau du côté opposé au piston (1), une butée axiale pour la partie annulaire (9), et **en ce que** les éléments d'encliquetage (12) s'encliquètent dans des évidements du piston (1) qui sont formés par le fait que le piston (1) présente un alésage (6) s'étendant concentriquement au renfoncement de forme sphérique (3) et, à l'extrémité de celui-ci, un alésage (14) s'étendant transversalement à l'axe du piston (1), dans lequel alésage s'engagent les éléments d'encliquetage (12).

2. Liaison pour tige de piston selon la revendication 1, **caractérisée en ce que** la partie annulaire (9) se compose de segments annulaires (7, 8) qui peuvent être assemblés correctement en position les uns aux autres à l'aide d'éléments de guidage (19, 20), chaque segment annulaire (7, 8), dans l'état assemblé, présentant un élément d'encliquetage (12) faisant saillie axialement dans la direction du piston (1), et les éléments d'encliquetage (12) étant de préférence diamétralement opposés sur la partie annulaire (9).

3. Liaison pour tige de piston selon l'une quelconque des revendications 1 à 2, **caractérisée en ce que** la partie annulaire (9) comprend deux segments annulaires (7, 8).

4. Liaison pour tige de piston selon la revendication 3, **caractérisée en ce que** les segments annulaires (7, 8), présentent des éléments de guidage (19, 20) s'engageant les uns dans les autres au niveau des surfaces de séparation (18) tournées l'une vers l'autre dans l'état monté.

5. Liaison pour tige de piston selon la revendication 4, **caractérisée en ce que** les éléments de guidage comprennent à chaque fois une goupille (19) faisant saillie au-delà de la surface de séparation (18) de l'un des segments annulaires (7) et un évidement (20) disposé dans la surface de séparation de l'autre segment annulaire (8).

6. Liaison pour tige de piston selon l'une quelconque des revendications 3 à 5, **caractérisée en ce que** les segments annulaires (7, 8) se composent de plastique, de préférence sont fabriqués par moulage par injection.

7. Liaison pour tige de piston selon l'une quelconque des revendications 1 à 6, **caractérisée en ce que** l'étrier de fixation (15) est réalisé en forme de U et **en ce que** ses branches (16) peuvent être enfoncées dans des alésages (22) du cylindre (16) s'étendant dans la direction transversale par rapport à l'axe du piston (1), de telle sorte qu'elles viennent en prise par l'arrière avec les segments annulaires (7, 8) des deux côtés de l'axe de la partie annulaire (9) au niveau du côté opposé au piston (1).
